# EUROPÄISCHE PATENTANMELDUNG

(11) **EP 4 844 500 A1**
(43) Veröffentlichungstag der Anmeldung: **25.11.2026**
(21) Anmeldenummer: 25178269.4
(22) Anmeldetag: 22.05.2025
(51) Int. Cl.: G05B 13/02, G05B 15/02

(54) **ERMITTLUNG VON HEIZKURVENPARAMETERN EINES HEIZSYSTEMS MITTELS EINES MASCHINELLEN LERNALGORITHMUS**

(71) Anmelder: Fraunhofer-Gesellschaft zur Förderung der angewandten Forschung e.V., 80686 München (DE)
(72) Erfinder: Dr. FRISON, Lilli, 79110 Freiburg (DE); GÖLZHÄUSER, Simon, 79110 Freiburg (DE)
(74) Vertreter: LBP Lemcke, Brommer & Partner Patentanwälte mbB

(57) **Zusammenfassung**

Die Erfindung betrifft ein Verfahren zur Ermittlung optimaler Heizkurvenparameter, zumindest Steigung und Parallelverschiebung einer Heizkurve des Heizsystems, eines Heizsystems für ein Gebäude mittels eines maschinellen Lernalgorithmus. Es wird eine Eingangssequenz für N Parametersätze der Heizkurvenparameter mit gemessenen und berechneten Temperaturwerten erstellt und mittels eines maschinellen Lernalgorithmus jeweils eine Ausgangssequenz in Form von zukünftigen Werten der Raumtemperatur ausgehend von den N Eingangssequenzen berechnet. Eine Zielfunktion auf Basis der Ausgangssequenzen wird minimiert, um die optimalen Heizkurvenparameter zu bestimmen.

## Beschreibung

Die Erfindung betrifft ein Verfahren zur Ermittlung optimaler Heizkurvenparameter eines Heizsystems für ein Gebäude mittels eines maschinellen Lernalgorithmus, eines Heizsystems, eines Computerprogramms und eines computerimplementierten Verfahrens.

Bekannte Heizsysteme zur Beheizung von Gebäuden umfassen üblicherweise einen Wärmeerzeuger, beispielsweise eine Wärmepumpe oder einen Heizkessel, der ein flüssiges Wärmeträgermedium auf eine vorgegebene Vorlauftemperatur erhitzt und dieses erwärmte Wärmeträgermedium an eine Vorlaufleitung des Heizsystems bereitstellt. Über einen Wärmekreislauf zirkuliert das Wärmeträgermedium, typischerweise Wasser, und erwärmt Heizkörper oder Flächenheizungen (Fußboden-, Wand-, Decken- oder Bauteilaktivierung) im Gebäude, welche die im Wärmeträgermedium gespeicherte Wärme abgeben und im Gebäude verteilen. Nachdem ein Wärmeträgermedium Wärme abgegeben hat und erkaltet ist, wird es über einen Rücklauf wieder der Heizquelle zugeführt.

Bei einem witterungsgeführten Wärmeerzeuger wird die Vorlauftemperatur in Abhängigkeit von der Außentemperatur, beispielsweise ein Mittelwert der letzten 24 Stunden, eingestellt. Eine Funktion, die den Zusammenhang zwischen Vorlauftemperatur und Außentemperatur beschreibt, wird als Heizkurve oder Heizkennlinie bezeichnet. Die Heizkurve wird üblicherweise durch zwei Funktionsparameter, die Steigung (auch als Steilheit bezeichnet) und die Parallelverschiebung (auch als Fußpunkt oder Offset bezeichnet) bestimmt. Die Heizkurve ist üblicherweise als Funktion bekannt und wird an der Regeleinrichtung des Wärmeerzeugers eingestellt.

Aus Energieeffizienzgründen soll die Vorlauftemperatur üblicherweise so gering wie möglich sein. Gleichzeitig definieren Komfortanforderungen eine notwendige Vorlauftemperatur, die abhängig von der Außentemperatur und den Gebäudebedingungen ist.

Die Heizkurve wird in der Regel durch zwei Parameter beschrieben: die Steigung (Steilheit) und eine Parallel- bzw. Niveauverschiebung der gesamten Kurve, die - je nach Betrachtungsweise - als Offset oder über den zugehörigen Fußpunkt definiert wird. Moderne Heizsystem ermöglichen eine Einstellung der Heizkurve anhand zumindest dieser Heizkurvenparameter, der Parallelverschiebung und der Steigung, und ermöglichen so einen effizienten Betrieb. Aufgrund individueller Bauweisen und Eigenschaften von Gebäuden und individueller Gebäudenutzung wird eine Einstellung der Heizkurve, welche die Vorlauftemperatur bestimmt, individuell für jedes Gebäude vorgenommen. Ungeeignete Heizkurvenparameter führen zu einem ineffizienten Betrieb oder zu nicht ausreichender Heizleistung.

Aus dem Stand der Technik bekannte Verfahren zur Anpassung der Heizkurve auf das Gebäude beruhen auf manuellem Feedback des Nutzers, auch Mensch-Maschine-Interaktion genannt, zusammen mit manuellem oder elektronischem Öffnen und Schließen der Thermostatventile, wie zum Beispiel in der Druckschrift Patent EP4027211 A1 beschrieben. Diese Verfahren haben den Nachteil, dass sie Interaktion mit dem Nutzer und Einstellungen zusätzlicher Komponenten, wie der Thermostatventile erfordern.

Alternativ ist beispielsweise aus WO2018/060157A1 ein Verfahren zum Ermitteln von Heizkurvenparametern eines Heizsystems bekannt, bei dem die Vorlauftemperatur iterativ in 1 K-Schritten in jeder Nacht stündlich abgesenkt wird. Eine Heizkurve wird als Eingangsgröße für ein neuronales Netzwerk genutzt. Zudem werden Sensordaten im neuronalen Netzwerk benutzt, um einen Komfort und Energieverbrauch vorherzusagen und Einstellungen vorzunehmen, bei denen Komfort und Energieverbrauch optimiert werden. Bei diesem Trial-and-Error-Ansatz kommt es notwendigerweise zu Abweichungen von einer optimalen Heizkurve, da die Heizkurve selbst nicht optimiert wird, nicht die optimalen Heizkurvenparameter bestimmt werden und nicht direkt weitere Vorgaben wie Minimierung des Energieverbrauchs berücksichtigt werden können. Zudem dauert es lange, bis für mehrere Werte der Außentemperatur eine geeignete Vorlauftemperatur ermittelt würde.

Es ist daher Aufgabe der Erfindung, ein Verfahren vorzuschlagen, um Heizkurvenparameter eines Heizsystems automatisiert zu optimieren.

Gelöst ist diese Aufgabe durch ein Verfahren gemäß Anspruch 1, durch ein Heizsystem gemäß Anspruch 16, durch ein Computerprogramm nach Anspruch 17, sowie durch ein computerimplementiertes Verfahren nach Anspruch 18. Vorteilhafte Ausgestaltungen des erfindungsgemäßen Verfahrens finden sich in den abhängigen Ansprüchen. Hiermit wird der Wortlaut sämtlicher Ansprüche explizit per Referenz in die Beschreibung einbezogen.

Das erfindungsgemäße Verfahren zur Ermittlung optimaler Heizkurvenparameter eines Heizsystems, zumindest Steigung und/oder Parallelverschiebung einer Heizkurve des Heizsystems, für ein Gebäude mittels eines maschinellen Lernalgorithmus, umfasst die folgenden Verfahrensschritte:
A Messen zumindest einer Raumtemperatur zumindest eines Führungsraums und einer Außentemperatur mittels Temperatursensoren, sowie Aufzeichnen der Messwerte mittels einer Recheneinheit;
B Auswählen von N Parametersätzen für die Heizkurvenparameter;
C Berechnen von zukünftigen Werten zumindest der Vorlauftemperatur bis zu einem Optimierungshorizont für jeden der N Parametersätze;
D Erstellen einer Eingangssequenz für jeden der N Parametersätze, wobei jede Eingangssequenz die aufgezeichneten Messwerte aus Verfahrensschritt A und die berechneten Werte aus Verfahrensschritt C umfasst, welche für den zugrundeliegenden Parametersatz berechnet wurden;
E Berechnen von Ausgangssequenzen in Form von zukünftigen Werten der Raumtemperatur ausgehend von den N Eingangssequenzen mittels des maschinellen Lernalgorithmus;
F Erzeugen einer Zielfunktion auf Basis der Ausgangssequenzen vom aktuellen Zeitpunkt bis zum Optimierungshorizont derart, dass die Zielfunktion von einer Abweichung der zukünftigen Werte der Raumtemperatur von einer Solltemperatur abhängt;
G Optimieren der Zielfunktion zur Bestimmung optimaler Heizkurvenparameter.

Die Erfindung unterscheidet sich daher insbesondere darin von vorbekannten Verfahren, dass nicht die Heiztemperatur (Vorlauftemperatur) der Wärmepumpe an die Wärmepumpe übertragen wird, sondern die optimalen Heizkurvenparameter Steigung und Parallelverschiebung bestimmt werden und diese an die Wärmepumpe übertragen werden können. Dies führt zu einem robusten Regelungsmechanismus, der gegenüber Verbindungsausfällen unempfindlich ist und rechnerisch effizient umgesetzt werden kann.

Das erfindungsgemäße Verfahren bietet den Vorteil, dass die optimierten Heizkurvenparameter zuverlässig und automatisiert ermittelt werden. Das Verfahren erfordert kein menschliches Eingreifen und insbesondere kein Fachwissen. Vielmehr wird automatisiert ein effizienter Betrieb des Heizsystems erzielt. Das Verfahren bietet als weiteren Vorteil, dass kein Abweichen vom optimalen Betrieb notwendig ist, um Heizkurvenparameter zu ermitteln, und gleichzeitig ein stabiler, effizienter und komfortabler Betrieb erreicht wird.

Die erfindungsgemäße Aufgabe ist ebenfalls gelöst durch ein Heizsystem mit einem Vorlauf, einer Recheneinheit und Temperatursensoren zum Messen zumindest einer Raumtemperatur eines Führungsraumes und einer Außentemperatur. Die Recheneinheit ist eingerichtet, das oben beschriebene erfindungsgemäße Verfahren auszuführen, oder weist eine Schnittstelle auf, welche verbindbar mit einer weiteren externen Recheneinheit ist, die eingerichtet ist, das oben beschriebene erfindungsgemäße Verfahren auszuführen.

Das erfindungsgemäße Heizsystem wird bevorzugt mittels des oben beschriebenen erfindungsgemäßen Verfahrens beziehungsweise einer bevorzugten Ausführungsform des erfindungsgemäßen Verfahrens betrieben. Das erfindungsgemäße Verfahren ist bevorzugt zum Betrieb eines erfindungsgemäßen Heizsystems beziehungsweise einer bevorzugten Ausführungsform ausgebildet. Das erfindungsgemäße Heizsystem zeigt ebenfalls die vorgenannten Vorteile des erfindungsgemäßen Verfahrens.

Das Heizsystem umfasst in einer bevorzugten Ausführungsform der Erfindung einen Wärmeerzeuger, insbesondere eine Wärmepumpe oder einen Heizkessel, sowie einen Vorlauf, eine Recheneinheit und mehrere Temperatursensoren. Die Recheneinheit ist zumindest mittelbar signaltechnisch mit den Temperatursensoren verbunden und empfängt von diesen gemessene Messdaten. Die Recheneinheit weist einen Datenspeicher auf, in dem unter anderem empfangene Messdaten gespeichert werden können.

Mittels des Wärmeerzeugers wird ein Wärmeträgermedium erhitzt. Das Wärmeträgermedium wird im Vorlauf vorgehalten und weist dort eine Vorlauftemperatur auf. Die Vorlauftemperatur wird mit einem Temperatursensor gemessen, welcher Messdaten an die Recheneinheit sendet. Bevorzugt handelt es sich bei dem Wärmeerzeuger um eine Wärmepumpe.

Zumindest ein weiterer Temperatursensor ist so angeordnet, dass er die Außentemperatur, das heißt die Umgebungstemperatur des Gebäudes, misst. Die Außentemperatur kann auch mittels mehrerer Temperatursensoren gemessen werden und Messwerte der mehreren Temperatursensoren könnten miteinander mittels der Recheneinheit kombiniert werden.

In zumindest einem Raum des Gebäudes, dem Führungsraum, ist ein Temperatursensor angeordnet, der eine Temperatur des Führungsraums misst und diese Raumtemperatur an die Recheneinheit sendet. Bevorzugt werden mehrere Temperatursensoren verwendet, um in unterschiedlichen Führungsräumen des Gebäudes jeweils eine Raumtemperatur zu erfassen. Jeder Raumtemperatursensor sendet Messdaten an die Recheneinheit. Messwerte verschiedener Führungsräume können auf unterschiedliche Weise miteinander kombiniert werden. Bevorzugt wird ein Mittelwert der Raumtemperaturen der verschiedenen Führungsräume gebildet, insbesondere bevorzugt erfolgt eine Gewichtung nach der Raumfläche der Führungsräume.

Die Recheneinheit kann insbesondere einen Chip aufweisen, der eingerichtet ist, zumindest die Verfahrensschritte B bis F des erfindungsgemäßen Verfahrens auszuführen. Sie kann als eigenständige Baugruppe ausgebildet sein, welche verbindbar mit weiteren Elementen des Heizsystems ist, oder sie kann zusammen mit einem weiteren Element des Heizsystems als Baugruppe ausgebildet sein, beispielsweise als Teil des Wärmeerzeugers.

In Verfahrensschritt A werden mittels der Temperatursensoren jeweils mehrere Messwerte der Raumtemperatur und der Außentemperatur gemessen und an die Recheneinheit gesendet. Bevorzugt werden die Messwerte zusammen mit dem Zeitpunkt, zu dem ein Messwert eines Temperatursensors gemessen wurde, in einem Datenspeicher der Recheneinheit gespeichert. Es liegt ebenfalls im Rahmen der Erfindung, dass mittels der Temperatursensoren kontinuierlich gemessen wird. Ein Messzeitpunkt entspricht dann dem Zeitpunkt, zu dem ein Messwert einer kontinuierlichen Temperaturmessung aufgezeichnet wird.

In einer bevorzugten Ausführungsform der Erfindung werden zusätzlich die Vorlauftemperatur, und/oder die Rücklauftemperatur und/oder ein Volumenstrom gemessen und bevorzugt aufgezeichnet. Dadurch erhöht sich die Genauigkeit.

In Verfahrensschritt B werden N Parametersätze für die Heizkurvenparameter ausgewählt. N ist eine natürliche Zahl und beträgt mindestens 1. Ein Parametersatz umfasst für jeden der Heizkurvenparameter, zumindest Parallelverschiebung und/oder Steigung der Heizkurve des Wärmeerzeugers, einen Wert. Im einfachsten Fall ist der Parametersatz daher ein einzelner Wert einer Parallelverschiebung, eines Fußpunktes, oder einer Steigung der Heizkurve. Werden zwei Parameter optimiert, dann kann der Parametersatz ein Werte-Paar bestehend aus Parallelverschiebung und Steigung sein. Das erfindungsgemäße Verfahren ist jedoch nicht auf diese Heizkurvenparameter beschränkt und kann ergänzend weitere Heizkurvenparameter einbeziehen. Parallelverschiebung und Steigung sind nur die grundlegendsten bekannten Heizkurvenparameter, wobei es denkbar ist, dass die Vorlauftemperatur auch anhand von weiteren Größen einstellbar ist, oder dass komplexere Heizkurven definiert werden, wobei zusätzliche Heizkurvenparameter einstellbar sind.

Für jeden der N ausgewählten Parametersätze werden in Verfahrensschritt C zukünftige Werte der Vorlauftemperatur anhand der Heizkurve mit den aktuellen Heizkurvenparametern des Heizsystems berechnet. Die Vorlauftemperatur kann grundsätzlich mit bekannten Formeln für die Heizkurve berechnet werden. Die Erfindung ist nicht auf eine bestimmte Berechnungsvariante beschränkt.

Ein zukünftiger Wert drückt aus, wie hoch die Vorlauftemperatur zu einem zukünftigen Zeitpunkt erwartet wird. Da die Vorlauftemperatur nicht nur von den Heizkurvenparametern, sondern auch zumindest von der Außentemperatur abhängt, wird ein zukünftiger Verlauf der Außentemperatur angenommen. Im einfachsten Fall wird dazu die zuletzt gemessene Außentemperatur verwendet, wobei auch komplexere Verfahren zum Schätzen einer zukünftigen Entwicklung der Außentemperatur in Betracht kommen.

Die zukünftigen Werte der Vorlauftemperatur werden dabei für gewählte Zeitpunkte bis zu einem Optimierungshorizont berechnet. Der Optimierungshorizont ist ein Zeitabschnitt oder eine Zeitdauer, indem die Heizkurvenparameter optimiert werden. Über den Optimierungshorizont hinaus werden bevorzugt keine weiteren zukünftigen Werte berechnet.

In Verfahrensschritt D wird für jeden in Verfahrensschritt B ausgewählten Parametersatz eine Eingangssequenz erstellt. Jede so erstellte Eingangssequenz umfasst die aufgezeichneten Messwerte und die zukünftigen Werte, welche für den entsprechenden Parametersatz berechnet wurden. Bevorzugt sind Werte einer Sequenz, sofern zeitabhängig, jeweils auf einen Zeitpunkt bezogen. Eine Sequenz umfasst mindestens einen Wert. Sind von einer Sequenz mehrere Werte derselben Größe, wie bspw. Vorlauftemperatur, umfasst, sind diese Werte bevorzugt nach der Zeit geordnet.

In einer bevorzugten Ausführungsform der Erfindung wird die Zeitinformation in den Eingangsdaten für den maschinellen Lernalgorithmus nicht zwingend angegeben, aber zumindest indirekt über die Reihenfolge der Werte in der Sequenz transportiert. In diesem Fall erhält der maschinelle Lernalgorithmus Informationen aus dem sequenziellen Charakter der Eingangsdaten.

Mit den Begriffen "Eingangssequenz" und "Ausgangssequenz" wird zum Ausdruck gebracht, dass eine Eingangssequenz als Eingabegröße für einen maschinellen Lernalgorithmus dient, während eine Ausgabesequenz ein Ergebnis des maschinellen Lernalgorithmus ist. Eine Sequenz ist einem Parametersatze der Heizkurvenparameter zuordenbar. Jede der N Eingangssequenzen umfasst zumindest die folgenden Werte: Gemessene Raumtemperatur des Führungsraums, gemessene Außentemperatur, berechnete Vorlauftemperatur für zumindest einen Zeitschritt (Optimierungshorizont) in Abhängigkeit von dem zugeordneten Parametersatz.

Um die Datenbasis zu erhöhen, werden zusätzlich folgende Werte der Eingangssequenz hinzugefügt: Gemessene Vorlauftemperatur und/oder gemessene Rücklauftemperatur und/oder gemessener Volumenstrom und/oder gemessene Einstrahlung sowie aufgezeichnete Vorlauftemperatur und/oder aufgezeichnete Rücklauftemperatur und/oder aufgezeichneter Volumenstrom und/oder aufgezeichnete Einstrahlung und/oder die aufgezeichnete Raumtemperatur und/oder die aufgezeichnete Außentemperatur.

In Verfahrensschritt C wurden nicht für alle Messgrößen zukünftige Werte berechnet. Während zumindest für die Vorlauftemperatur zukünftige Werte vorliegen, gibt es keine zukünftigen Werte für zumindest die Raumtemperatur. Bevorzugt werden für diejenigen Größen, für die keine zukünftigen Werte berechnet werden, historische aufgezeichnete Messwert verwendet. Für Messgrößen, für welche zukünftige Werte berechnet werden, werden bevorzugt mehrere Werte, sowohl gemessene Werte und berechnete, zukünftige Werten in mehreren Zeitschritten bis zum Optimierungshorizont in die Eingangssequenz aufgenommen.

In Verfahrensschritt E werden die in Verfahrensschritt D erstellten Eingangssequenzen herangezogen, um mittels eines maschinellen Lernalgorithmus zukünftige Werte der Raumtemperatur zu berechnen. Der Lernalgorithmus wird dazu mit jeder Eingangssequenz durchgeführt und mit den berechneten Werten je Eingangssequenz eine Ausgangssequenz erstellt. Somit werden N Ausgangssequenzen erstellt, wobei jede Ausgangssequenz ihrer Eingangssequenz zuordenbar ist.

In den folgenden Verfahrensschritten F und G wird eine Zielfunktion optimiert, um Werte der Heizkurvenparameter zu finden, für welche die Zielfunktion einen optimalen Wert aufweist. Zunächst wird für die N Eingangs- und Ausgangssequenzen jeweils die Zielfunktion berechnet. Die Zielfunktion hängt von Abweichungen der zukünftigen Werte der Raumtemperatur von einer Solltemperatur ab. Die Solltemperatur ist wählbar. Sie kann konstant gehalten werden oder zeitabhängig variieren. Dabei liegt es ebenfalls im Rahmen der Erfindung, dass nicht eine diskrete Solltemperatur zugrunde gelegt wird, sondern alternativ ein akzeptabler Temperaturbereich, beispielsweise ein Solltemperatur-Intervall.

Bevorzugt ist die Zielfunktion eine gewichtete Summe von Abweichungen der Raumtemperatur von einer Solltemperatur, wobei weiter in der Zukunft liegende Zeitpunkte schwächer gewichtet werden. Besonders bevorzugt kann die Zielfunktion auf die Form ~ Σᵢ *ωᵢ (ST* - *RTᵢ*)² zurückgeführt werden, wobei der Index i einem zukünftigen Zeitpunkt entspricht, *ST - RTᵢ* die Differenz zwischen Solltemperatur und der Raumtemperatur zu einem zukünftigen Zeitpunkt beschreibt und wobei *ωᵢ* ein zeitabhängiger Gewichtungsfaktor ist. Bei erstmaligem Auswerten der Zielfunktion sind zukünftige Werte der Raumtemperatur nur für diejenigen Werte der Heizkurvenparameter bekannt, welche in Verfahrensschritt B ausgewählt wurden. Diese Werte liegen jeweils für eines der N Parametersätze als Ausgangssequenz vor.

Bevorzugt wird also eine Zielfunktion definiert, die aus mehreren summierten und gewichteten Komponenten für die Zeitschritte vom aktuellen Zeitpunkt bis zum Optimierungshorizont besteht: der Abweichung der tatsächlich gemessenen und für die zukünftigen Zeitschritte mit dem maschinellen Lernalgorithmus vorhergesagten Innentemperatur von der Solltemperatur, oder der Abweichung von den Grenzen eines Solltemperaturbandes, und optional einer Approximation des elektrischen Energieverbrauchs des Wärmeerzeugers. Beide Größen, die Abweichung von der Solltemperatur und die Approximation des Energieverbrauchs, werden mit einer geeignet gewählten Gewichtung gegeneinander abgewogen. Weiter in der Zukunft liegende Zeitschritte werden bevorzugt durch einen Diskontierungsfaktor mit einer geringeren Gewichtung als frühere Zeitpunkte berücksichtigt.

Die Erfindung ist grundsätzlich nicht auf eine konkrete Optimierungsmethode begrenzt. Auf besonders einfache Weise kann die Zielfunktion optimiert werden, indem die N berechneten Werte der Zielfunktion miteinander verglichen werden und dann der optimale Wert ausgewählt wird. Die optimalen Heizkurvenparameter sind dann jene, für welche die Zielfunktion ihren optimalen Wert aufweist. Es ist jedoch auch im Sinne der Erfindung, einen komplexeren Optimierungsalgorithmus zu verwenden, der beispielsweise mit dem optimalen Wert der N bereits berechneten Werte der Zielfunktion startet.

Bevorzugt wird die Zielfunktion in Verfahrensschritt G optimiert, indem sie minimiert wird, um den Parametersatz für die Heizkurvenparameter zu finden, bei dem die Abweichung von der Solltemperatur am geringsten ist. Abhängig vom Aufbau der Zielfunktion liegt es ebenfalls im Rahmen der Erfindung, dass die Zielfunktion für die Optimierung maximiert wird. Als Ergebnis liegen N Werte der Zielfunktion vor, wobei jeder Wert einem der N Parametersätze der Heizkurvenparameter entspricht.

In einer bevorzugten Ausführungsform der Erfindung wird eine Optimierung durchgeführt, indem eine Sequenz von Optimierungsschritten durchgeführt wird, bis ein Abbruchkriterium erfüllt ist. Ein Abbruchkriterium kann beispielsweise darin bestehen, dass ein Optimum der Zielfunktion ermittelt wurde, dass ein gefundener Wert der Zielfunktion nicht verbessert wird, oder dass der Optimierungsalgorithmus eine bestimmte Anzahl an Optimierungsschritten durchgeführt hat. Es werden die folgenden Optimierungsschritte wiederholt, bis das Abbruchkriterium erfüllt ist:
- Variieren der Heizkurvenparameter;
- Auswerten der Zielfunktion in Abhängigkeit der variierten Heizkurvenparameter mittels Interpolierens zwischen vormals berechneten Werten der Zielfunktion und/oder mittels Berechnung weiterer Werte der Raumtemperatur mit dem maschinellen Lernalgorithmus.

Hierdurch ergibt sich der Vorteil, dass die Heizkurvenparameter besser an die Gegebenheiten angepasst werden.

In einer vorteilhaften Weiterbildung wird die Optimierung mittels Interpolierens durchgeführt. Die Optimierungsschritte der Optimierung umfassen dabei:
- Variieren der Heizkurvenparameter;
- Auswerten der Zielfunktion in Abhängigkeit der variierten Heizkurvenparameter mittels Interpolierens zwischen den in Verfahrensschritt F berechneten N Werten der Zielfunktion basierend auf den N in Verfahrensschritt E berechneten Ausgangssequenzen. Als Interpolationsmethode wird bevorzugt polynomielle oder stückweise polynomielle Interpolation verwendet.

Bevorzugt wird also im Rahmen der Optimierung eine Hyperebene als Approximation der Zielfunktion mittels Interpolation zwischen den N Stützstellen aufgespannt und durch Bestimmung des Minimums der Hyperebene das Optimum der Heizkurvenparameter bestimmt.

Alternativ liegt es auch im Rahmen der Erfindung, mittels des maschinellen Lernalgorithmus weitere Werte der Raumtemperatur mit den variierten Heizkurvenparametern zu berechnen.

Bevorzugt wird die Zielfunktion mittels Interpolation, bevorzugt polynomielle oder stückweise polynomielle Interpolation, in Abhängigkeit der Heizkurvenparameter berechnet und mittels Optimierung, vorzugsweise ableitungsbasierte Optimierung, minimiert. Hierdurch ergibt sich der Vorteil, dass durch die Interpolation Rechenaufwand gespart werden kann.

In der ersten Alternative sind die N Parametersätze und die darauf basierend berechneten Werte für die Zielfunktion Stützstellen in einem Parameterraum. Durch Interpolieren der Zielfunktion zwischen den Stützstellen werden die optimalen Heizkurvenparameter bestimmt.

Bei der Optimierung werden als freie Parameter die Heizkurvenparameter, also zumindest Parallelverschiebung und/oder Steigung, variiert. Bevorzugt berücksichtigt der Optimierungsalgorithmus Randbedingungen der Heizkurvenparameter. Der Optimierungsalgorithmus ermittelt eine Vorgabe abhängig von berechneten Werten der Zielfunktion. Beispielsweise kann es sich bei dem Optimierungsalgorithmus um ein Gradientenabstiegsverfahren handeln und eine Vorgabe zum Variieren anhand eines Gradienten zwischen vormals berechneten Werten der Zielfunktion ermitteln. Da Interpolieren ausgehend von berechneten Stützstellen weniger rechenintensiv ist als eine Verwendung eines maschinellen Lernalgorithmus, wird somit Zeit gespart, sodass das Verfahren schneller und kostengünstiger ausführbar ist.

Alternativ wird die Zielfunktion mittels Berechnung weiterer Werte der Raumtemperatur mit dem maschinellen Lernalgorithmus ausgewertet. Da eine Variation eines Heizkurvenparameters den zukünftigen Verlauf der Vorlauftemperatur verändert, werden bei dieser Variante anhand der variierten Heizkurvenparameter weitere zukünftige Werte für die Vorlauftemperatur berechnet. Dabei wird wiederum eine Annahme bezüglich einer zukünftigen Entwicklung der Außentemperatur getroffen. Mit diesen weiteren zukünftigen Werten der Vorlauftemperatur wird eine weitere Eingangssequenz erstellt. Eine weitere Eingangssequenz umfasst neben den weiteren zukünftigen Werten der Vorlauftemperatur die aufgezeichneten Messwerte. Eine veränderte Vorlauftemperatur beeinflusst eine zukünftige Entwicklung der Raumtemperatur. Weitere zukünftige Werte der Raumtemperatur werden daher berechnet, welche von der zuvor erstellten weiteren Eingangssequenz abhängen und somit den variierten Heizkurvenparametern entsprechen.

Bevorzugt werden errechnete Werte der Zielfunktion und die zugehörigen Heizkurvenparameter während der Optimierung mittels der Recheneinheit gespeichert und nach Durchführen der Optimierung abrufbar bereitgestellt. Ein Wert der Zielfunktion, der als bester Wert betrachtet wird, ist auswählbar und die zugehörigen Heizkurvenparameter liegen somit als die optimalen Heizkurvenparameter vor.

In einer bevorzugten Ausführungsform werden in Verfahrensschritt F zum Optimieren der Zielfunktion die folgenden Optimierungsschritte wiederholt, bis ein Abbruchkriterium erfüllt ist:
- Variieren der Heizkurvenparameter nach Vorgabe des Optimierungsalgorithmus;
- Berechnen weiterer zukünftiger Werte der Vorlauftemperatur anhand der variierten Heizkurvenparameter und Bilden einer weiteren Eingangssequenz, wobei die Eingangssequenz die weiteren berechneten Werte der Vorlauftemperatur umfasst;
- Auswerten der Zielfunktion, indem anhand der variierten Heizkurvenparameter weitere zukünftige Werte der Vorlauftemperatur berechnet werden, mit diesen Werten eine weitere Eingangssequenz erstellt wird und anhand der weiteren Eingangssequenz weitere Werte der Raumtemperatur mittels des maschinellen Lernalgorithmus berechnet werden.

Dies bietet den Vorteil, dass durch die adaptive Stützstellenwahl und Auswertung mit dem maschinellen Lernalgorithmus das Optimum der Zielfunktion zuverlässig ermittelt werden kann.

In einer weiteren vorteilhaften Ausführungsform wird ein weiterer Verfahrensschritt H durchgeführt, in dem die optimalen Heizkurvenparameter dem Heizsystem zur Verfügung gestellt werden. Wie vorstehend beschrieben, liegen die während der Optimierung berechneten Werte der Zielfunktion abrufbar vor. Einer dieser Werte der Zielfunktion wird ausgewählt und die zugehörigen optimalen Heizkurvenparameter dem Heizsystem zur Verfügung gestellt. Das Auswählen erfolgt bevorzugt anhand des minimalen Wertes der Zielfunktion oder anhand von Stabilitätskriterien, mit denen ein Optimum der Zielfunktion charakterisiert wird. Somit sind die ermittelten, optimalen Heizkurvenparameter abrufbar und können an einem Heizsystem eingestellt werden.

Bevorzugt wird die Heizkurve des Heizsystems mit den optimierten Heizkurvenparametern angepasst und das Heizsystem mit der dahingehend optimierten Heizkurve betrieben.

Bevorzugt werden die optimalen Heizkurvenparameter dem Heizsystem quasi-kontinuierlich zur Verfügung gestellt. Dabei wird das Verfahren fortlaufend durchgeführt, wobei zwischen zwei Ausführungen aufgezeichnete Messwerte berücksichtigt werden. Nach jeder Ausführung des Verfahrens liegen somit basierend auf den aktuellen Messwerten optimale Heizkurvenparameter vor. Dadurch werden zuverlässigere optimale Heizkurvenparameter zur Verfügung gestellt.

Zwar liefert das erfindungsgemäße Verfahren bei vereinfachten Annahmen bezüglich der Außentemperatur zuverlässige, optimale Heizkurvenparameter. Dazu kann angenommen werden, dass die Außentemperatur unverändert bleibt, oder sich evidenzbasiert entwickeln wird, beispielsweise anhand eines Verlaufs der Außentemperatur an einem Vortag. In einer vorteilhaften Ausführungsform werden Daten einer Wetterprognose eingespeist. Diese Daten umfassen bevorzugt eine solare Einstrahlung und/oder die Außentemperatur. In Verfahrensschritt D werden mit diesen Daten die Eingangssequenzen erstellt. Somit kann verlässlicher die Außentemperatur bei einer Durchführung des erfindungsgemäßen Verfahrens berücksichtigt werden, wodurch zuverlässiger optimale Heizkurvenparameter ermittelbar sind.

Bevorzugt entspricht ein zukünftiger Wert der Außentemperatur dem Zeitpunkt, zu dem auch die Vorlauftemperatur berechnet wurde. Es ist im Sinne der Erfindung, dass zusätzlich oder alternativ mittels Interpolierens zukünftige Werte der Außentemperatur basierend auf einer Wetterprognose für ausgewählte zukünftige Zeitpunkte berechnet werden. In Verfahrensschritt D werden mit den zukünftigen Werten der Außentemperatur die *N* Eingangssequenzen erstellt. Dies ist vorteilhaft, weil damit die zukünftige Entwicklung der Außentemperatur genauer ermittelt wird als durch vereinfachte oder evidenzbasierte Annahmen. Dadurch ergibt sich eine verlässlichere Grundlage für die Ermittlung der Heizkurvenparameter und eine Abweichung der Raumtemperatur von der Solltemperatur kann verringert werden.

Wird ein Heizsystem neu installiert, dann liegen noch keine Messwerte vor, anhand derer die Heizkurvenparameter ermittelt werden können. In einer vorteilhaften Ausführungsform des Verfahrens werden der Recheneinheit historische Werte zumindest der Vorlauftemperatur und der Raumtemperatur zumindest eines Führungsraumes bereitgestellt. Die Eingangssequenzen werden in Verfahrensschritt D erstellt, sodass sie die historischen Werte umfassen.

Historische Daten sind bevorzugt Messdaten eines anderen Gebäudes und/oder vorbereitete Referenzdaten, und/oder sie können von demselben Gebäude stammen und mittels desselben Heizsystems oder mittels anderer Sensoren gemessen worden sein. Dies ist von Vorteil, da mittels der bereitgestellten Datengrundlage das Verfahren auch dann durchführbar ist, wenn noch wenige Messdaten aufgezeichnet wurden.

Grundsätzlich hängt eine Bewertung, wann optimale Heizkurvenparameter vorliegen, von einer Bewertungsgrundlage ab. Die Zielfunktion drückt diese Bewertungsgrundlage quantitativ aus. Im Vorangegangenen wird dabei die Abweichung der Raumtemperatur von einer Solltemperatur beschrieben. In einer bevorzugten Ausführungsform der Erfindung hängt die Zielfunktion von weiteren Größen ab, insbesondere von einer Approximation des elektrischen Energieverbrauchs des Heizsystems. Damit wird der Energieverbrauch des Heizsystems bei der Optimierung stärker berücksichtigt, sodass Heizkosten und Energie gespart werden. Die optimalen Heizkurvenparameter orientieren sich somit nicht nur an der gewünschten Solltemperatur, sondern auch an einem - möglichst niedrigen - Energieverbrauch.

In einer bevorzugten Ausführungsform der Erfindung werden die Heizkurvenparameter während eines vorgebbaren Zeitraums optimiert. Alternativ werden die Heizkurvenparameter während eines flexiblen Zeitraums, solange eine signifikante Verbesserung erkennbar ist, optimiert und in einem Verfahrensschritt G die über den kompletten Zeitraum optimierten, vorzugsweise nach einem gewichteten laufenden Mittelwert, konstanten Heizkurvenparameter dem Heizsystem zur Verfügung gestellt.

Bevorzugt werden zumindest die Verfahrensschritte A bis F und/oder der Lernprozess bis Ablauf einer vorgebbaren Dauer oder solange eine signifikante Verbesserung erkennbar ist wiederholt ausgeführt werden. Beispielsweise werden über einen Zeitraum von zwei Wochen wiederholt Messdaten aufgenommen und optimale Heizkurvenparameter ermittelt und zwischenzeitlich der Lernprozess ausgeführt, oder es wird ein Stabilitätskriterium bezüglich eines Wertes der über den Zeitraum gemittelten Heizkurvenparameter angegeben, dessen Erfüllung zum Abbruch des Verfahrens führt. Bevorzugt werden die optimierten Heizkurvenparameter in jedem Schritt gemittelt und ein laufender Durchschnitt gebildet, um so einen konstanten, über den Zeitraum optimierten Satz Heizkurvenparameter zu erhalten. Darin besteht eine robuste

Weise, besonders speziell auf das Gebäude zugeschnittene, optimale Werte der Heizkurvenparameter zu ermitteln, die künftig als konstante Parameter von dem Heizsystem verwendet werden können, ohne den Optimierungsprozess fortzuführen.

In einer weiteren vorteilhaften Ausführungsform werden in Verfahrensschritt D historische Werte zumindest der Vorlauftemperatur und der zugehörigen Raumtemperatur bereitgestellt, mit denen in Verfahrensschritt D die Eingangssequenzen erstellt werden. Die historischen Werte können wie oben beschrieben gemessene Werte, Werte aus Vergleichsgebäuden und/oder simulierte Werte o. ä. sein. Hierdurch verbessert sich die Genauigkeit des Verfahrens.

In einer bevorzugten Ausführungsform der Erfindung werden die N Testparametersätze für die Heizkurvenparameter aus einem gegebenen Parameterraum bestimmt, dessen Grenzen durch die technischen Gegebenheiten des Wärmeerzeugers festgelegt sind. Die Auswahl der N Testparametersätze in dem Parameterraum erfolgt bevorzugt gleichverteilt mit einem vorgebbaren Intervall oder zufällig, oder in einer Nachbarschaft des zuletzt ermittelten optimierten Heizkurvenparametersatzes.

In einer alternativen Ausführungsform der Erfindung wird lediglich ein Parametersatz (N = 1) als Startwert festgelegt und ausgehend von diesem Startwert wird das Verfahren in verschiedene Richtungen in dem Parameterraum durch wiederholtes Aufrufen des maschinellen Lernalgorithmus durchgeführt, um die optimalen Heizkurvenparameter zu finden. Diese bevorzugte Ausführungsform des erfindungsgemäßen Verfahrens eignet sich, um unabhängig von der Auswahl der Stützstellen ein Optimum der Zielfunktion zu ermitteln, zum Beispiel bei einer komplexeren Problemformulierung, mit zusätzlichen Beschränkungen bzgl. der Systemgrößen.

In einer weiteren vorteilhaften Ausführungsform werden die Verfahrensschritte B bis G mittels der Recheneinheit ausgeführt. Somit liegen die benötigten Daten an einem zentralen Ort vor und werden von einem einzigen System durchgeführt, wodurch die Ausführbarkeit erleichtert wird gegenüber einer Ausführung auf unterschiedlichen Systemen. Bevorzugt ist die Recheneinheit Teil des Heizsystems. In dieser Ausführungsform ist das Heizsystem funktional gekoppelt und es kann auf eine Schnittstelle verzichtet werden, über welche Ergebnisse des Verfahrens dem Heizsystem zur Verfügung gestellt werden.

In einer alternativen Ausführungsform ist die Recheneinheit des Heizsystems nicht eingerichtet, die Verfahrensschritte B bis F auszuführen, sodass diese Verfahrensschritte mit anderen Mitteln ausgeführt werden. Die Recheneinheit weist eine Schnittstelle auf, welche verbindbar ist mit einer weiteren Recheneinheit. Dabei ist die weitere Recheneinheit eingerichtet, zumindest die Verfahrensschritte B bis F auszuführen. Insbesondere ist die weitere Recheneinheit extern bezüglich des Heizsystems. Bevorzugt ist die weitere Recheneinheit Teil einer Rechnerwolke, mit der die Recheneinheit des Heizsystems über die Schnittstelle mittels des Internets verbindbar ist. Die Recheneinheit des Heizsystems sendet in diesem Fall Messwerte an die weitere Recheneinheit in der Rechen-Cloud. Die Recheneinheit in der Cloud führt zumindest die Verfahrensschritte B bis F aus. Bevorzugt trifft die weitere Recheneinheit zudem nach einem Auswahlkriterium eine Auswahl eines Wertes der Zielfunktion sowie der zugehörigen optimalen Heizkurvenparameter und übermittelt die ausgewählten Werte an die Recheneinheit des Heizsystems. Dadurch kann die rechenintensive Last des Verfahrens, welche besonders die Verwendung des maschinellen Lernalgorithmus betrifft, extern gegenüber dem Heizsystem durchgeführt werden. Somit kann die Recheneinheit des Heizsystems eine geringe Rechenleistung aufweisen und das Verfahren dennoch ausgeführt werden.

In einer bevorzugten Ausführungsform des erfindungsgemäßen Verfahrens liegt der Optimierungshorizont einen Zeitschritt, bevorzugt mehr als einen Zeitschritt in der Zukunft. Der Optimierungshorizont ist abhängig von dem Heizsystem und/oder den Gegebenheiten des Gebäudes. Höchstvorzugsweise wird der Optimierungshorizont eine Stunde, bevorzugt länger als 12 Stunden, besonders bevorzugt zwischen 15 Minuten und 24 Stunden in der Zukunft gewählt.

Ein einmaliges Ausführen des Verfahrens wird mit den Messwerten durchgeführt, die bis zu Beginn des Verfahrensschritts B gemessen wurden. Durch Fortschreiten der Zeit werden weitere Daten messbar. Es ist von Vorteil, wenn diese weiteren Messdaten im erfindungsgemäßen Verfahren benutzt werden, da mehr Daten eine genauere Prognose der Raumtemperatur ermöglichen. Daher wird in einer vorteilhaften Ausführungsform des Verfahrens ein Lernprozess ausgeführt, bei dem der maschinelle Lernprozess mit diesen weiteren Messdaten trainiert wird. Dadurch kann der maschinelle Lernalgorithmus präziser eine Entwicklung der Raumtemperatur prognostizieren.

Für das Trainieren des maschinellen Lernalgorithmus werden in einer bevorzugten Ausführungsform des erfindungsgemäßen Verfahrens mindestens mittels der Temperatursensoren Trainingsdaten der Raumtemperatur und der Außentemperatur des Gebäudes gemessen, vorzugsweise auch mittels weiterer Sensordaten für eine Vorlauf- und Rücklauftemperatur und für einen Volumenfluss. Es wird ein bevorzugt initialer Lernprozess ausgeführt, bei dem der maschinelle Lernalgorithmus mit diesen Trainingsdaten trainiert wird, bevorzugt optimiert durch eine Hyperparameteroptimierung. Vorzugsweise werden zusätzliche Daten von ähnlich gestalteten Alternativgebäuden gemessen, um die Trainingsdaten zu ergänzen und die Genauigkeit zu erhöhen.

In einer weiteren bevorzugten Ausführungsform der Erfindung ist der maschinelle Lernalgorithmus als ein Transformer-Modell oder als ein Rekurrentes Neuronales Netzwerk, bevorzugt als ein Transformer-Modell mit einem Rekurrenten Neuronalen Netzwerk, ausgebildet. Rekurrente Neuronale Netze sind besonders dazu geeignet, Daten mit sequenziellem Charakter zueinander in Bezug zu setzen und aus sequenziellen Zusammenhängen zu lernen. Der Lernprozess für den maschinelle Lernalgorithmus umfasst zumindest eine der folgenden Methoden, sowohl initial als auch im Lernprozess bei der Durchführung des Verfahrens:
- Finetuning,
- Inkrementelles Lernen,
- Transfer Learning,
- Sequenzielle Anpassung,
- Hyperparameter-Tuning.

Bevorzugt ist der Lernprozess bei der Durchführung des Verfahrens mittels der Methode des inkrementellen Lernens ausgebildet. Zumindest die aufgezeichneten Messwerte aus Verfahrensschritt A und die berechneten Werte aus Verfahrensschritt C werden kontinuierlich für einen vorgebbaren Zeitraum gespeichert. Bei wiederholter Durchführung des Verfahrens werden Gewichte des maschinellen Lernalgorithmus, insbesondere zu vorgebbaren Zeitpunkten, angepasst, sodass die Vorhersagen präziser auf die jeweils vorliegende reale Situation abgestimmt sind. Besonders bevorzugt werden die ältesten Daten verworfen, falls eine maximale Datenmenge erreicht ist.

Weiter betrifft die Erfindung ein Computerprogramm mit Anweisungen, durch deren Ausführung eine Recheneinheit veranlasst wird, zumindest die Verfahrensschritte B bis G des vorbeschriebenen Verfahrens auszuführen.

Die Erfindung betrifft zudem ein computerimplementiertes Verfahren zur Ermittlung optimaler Heizkurvenparameter mittels eines maschinellen Lernalgorithmus. Die Heizkurvenparameter umfassen zumindest eine Parallelverschiebung und eine Steigung. Das computerimplementierte Verfahren umfasst Empfangen oder Auslesen von Messdaten, Ausführen zumindest der vorbeschriebenen Verfahrensschritte B bis F und Bereitstellen von mittels dieser Verfahrensschritte ermittelten optimalen Heizkurvenparameter. Die Verfahrensschritte B bis F werden mit den empfangenen oder ausgelesenen Messwerten durchgeführt. Empfangene Messwerte können mittelbar oder unmittelbar von Temperatursensoren übertragen werden. Ergänzend oder alternativ können Messwerte aus einer Datenbank ausgelesen werden.

Durch das Computerprogramm und das computerimplementierte Verfahren werden ebenfalls die vorgenannten Vorteile des erfindungsgemäßen Verfahrens oder bevorzugter Ausführungsformen des erfindungsgemäßen Verfahrens erreicht.

Weitere bevorzugte Merkmale der Erfindung werden anhand von Ausführungsbeispielen und den Figuren erläutert. Dabei zeigt:
- Figur 1: eine schematische Darstellung eines Gebäudes mit einem Heizsystem,
- Figur 2: eine Darstellung eines Parameterraums der Heizkurvenparameter mit einer Auswahl an N Parametersätzen,
- Figur 3: eine Darstellung einer Eingangssequenz,
- Figur 4: eine Darstellung einer Eingangssequenz, die um eine Ausgangssequenz ergänzt wurde und
- Figur 5: eine Darstellung einer Optimierung der Zielfunktion.

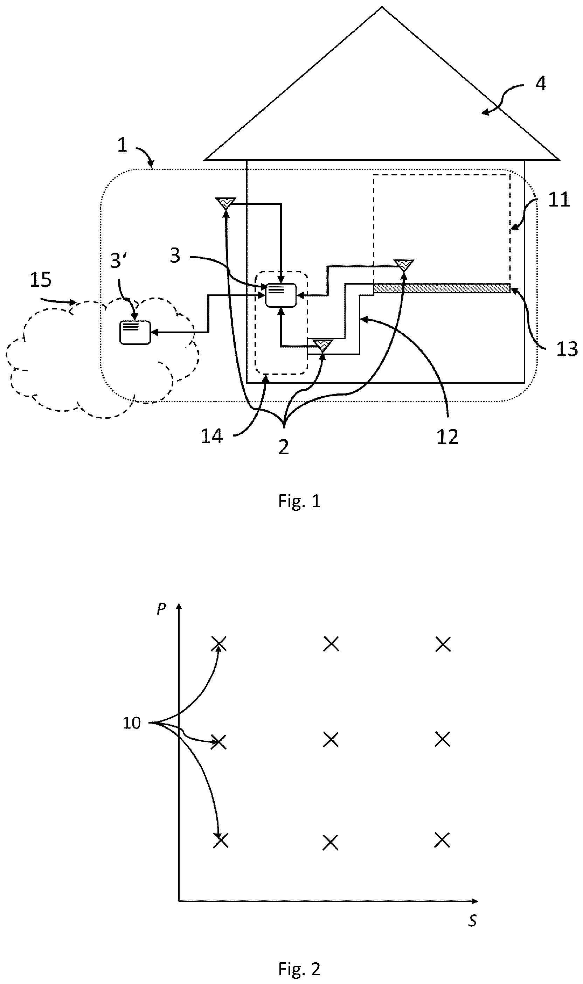

Figur 1 zeigt eine schematische Darstellung eines Gebäudes 4 mit einem Ausführungsbeispiel eines erfindungsgemäßen Heizsystem 1. Der Übersichtlichkeit halber wurde darauf verzichtet, einen vollständigen Wärmekreislauf darzustellen, beispielsweise ist daher kein Rücklauf eingezeichnet, der in bekannter Weise ergänzt werden kann, wie auch weitere übliche Elemente eines Wärmekreislaufs.

Ein Wärmeerzeuger 14, vorliegend eine Wärmepumpe, erzeugt eine Vorlauftemperatur im Vorlauf 12. Im Vorlauf 12 gespeicherte Wärme wird über ein Wärmeübertragermedium, vorliegend Wasser, einer Fußbodenheizung 13 zugeführt, wodurch die Fußbodenheizung eine Raumtemperatur in einem Führungsraum 11 beeinflusst. Das Beispiel ist anhand eines Führungsraums 11 dargestellt und auf mehrere Führungsräume erweiterbar.

In dem einen Führungsraum 11, im Vorlauf 12 und außerhalb des Gebäudes 4 ist jeweils ein Temperatursensor 2 angeordnet. Die Temperatursensoren messen Temperaturen ihrer jeweiligen Umgebung, also eine Raumtemperatur des Führungsraums 11, eine Vorlauftemperatur und eine Außentemperatur.

Das Heizsystem 1 umfasst eine Recheneinheit 3, welche vorliegend in die Wärmepumpe 14 integriert ist. Die Recheneinheit ist eingerichtet, von den Temperatursensoren 2 Messdaten zu empfangen und aufzuzeichnen. In einem Verfahrensschritt A einer beispielhaften Ausführungsweise des Verfahrens zur Ermittlung optimaler Heizkurvenparameter messen die Temperatursensoren jeweils mehrere Messwerte einer Temperatur, die einem Messzeitpunkt entsprechen. Diese Messwerte werden an die Recheneinheit 3 übermittelt und aufgezeichnet. Die Recheneinheit weist eine Schnittstelle auf, mittels der sie über das Internet mit einer weiteren Recheneinheit 3' verbindbar ist. Die weitere Recheneinheit 3' ist Teil einer Rechnerwolke und eingerichtet, die anhand folgenden Beispiels erläuterten Verfahrensschritte auszuführen.

**Über das Internet** sendet die Recheneinheit 3 Messwerte an die Recheneinheit 3' in der Rechnerwolke, welche nun die Verfahrensschritte B bis F einer beispielhaften Ausführung des erfindungsgemäßen Verfahrens ausführt. In Figur 2 ist ein Parameterraum der Heizkurvenparameter als zweidimensionales Diagramm dargestellt. Auf der Abszisse des Diagramms ist die Steigung *S* der Heizkurve aufgetragen, und auf der Ordinate die Parallelverschiebung P. In etwa gleichverteilt über einem Bereich des Parameterraums werden in Verfahrensschritt B neun Parametersätze 10 ausgewählt. Dadurch ist vorliegend ein Parametersatz jeweils ein Werte-Paar (*Sᵢ*, *Pⱼ*), mit i, j = 1, 2, 3, S1 < S2 < S3 und P1 < P2 < P3 ist.

In Verfahrensschritt C werden für jedes der in Verfahrensschritt B ausgewählten Werte-Paare zukünftige Werte der Vorlauftemperatur berechnet. Ein Optimierungshorizont von 24 h wird eingestellt. Die zukünftigen Werte der Vorlauftemperatur werden von einer aktuellen Zeit bis zu dem gewählten Optimierungshorizont berechnet. Die aktuelle Zeit beträgt im Beispiel 14:00 Uhr, sodass der Optimierungshorizont und die darin liegenden Werte bis 14:00 Uhr am Folgetag reichen. Als Zeitpunkte werden 22 Uhr, 6 Uhr und 14 Uhr gewählt. Es werden folglich drei Werte der Vorlauftemperatur pro Werte-Paar berechnet, um 22 Uhr, 6 Uhr und 14 Uhr.

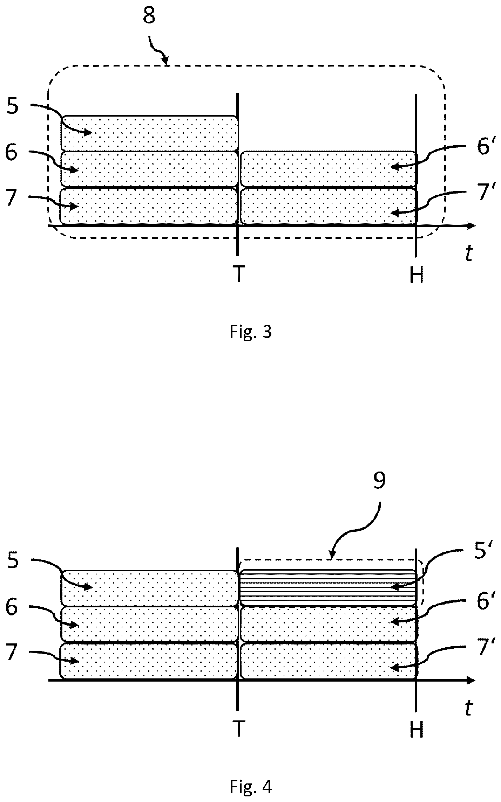

Zudem wird eine Wetterprognose ausgelesen, welche Werte der Außentemperatur umfasst. In Verfahrensschritt D wird für jedes Werte-Paar (*Sᵢ*, *Pⱼ*) eine Eingangssequenz erstellt, wie in Figur 3 veranschaulicht. Dazu werden die Messwerte der Raumtemperatur 5, Messwerte der Vorlauftemperatur 6 und Messwerte der Außentemperatur 7 jeweils nach ihrem Messzeitpunkt angeordnet. Die Eingangssequenz wird mit den berechneten, zukünftigen Werten der Vorlauftemperatur 6' und den der Wetterprognose entnommenen zukünftigen Werten der Außentemperatur 7' fortgeführt. Für die Raumtemperatur liegen somit nur Messwerte vor bis spätestens der aktuellen Zeit, also 14:00 Uhr.

Die Recheneinheit 3' der Rechnerwolke 15 ist mit einem Transformer-Modell als maschinellem Lernalgorithmus eingerichtet, das darauf trainiert ist, eine Ausgabesequenz 9 zukünftiger Werte der Raumtemperatur 5' basierend auf einer Eingabesequenz zu berechnen. Das Transformer-Modell wird in Verfahrensschritt E verwendet, um für jede der neun Eingangssequenzen 8 eine Ausgangssequenz 9 zu erzeugen. Ein so erzeugtes Paar einer Eingangs- und Ausgangssequenz ist in Figur 4 veranschaulicht. Die Ausgangssequenz 9 umfasst mittels des Transformer-Modells berechnete, zukünftige Werte der Raumtemperatur 5'. Vorliegend wurden, wie bei den Werten der Vorlauf- und Außentemperatur, die Werte der Raumtemperatur für 22 Uhr, 6 Uhr und 14 Uhr berechnet.

Darauffolgend wird in Verfahrensschritt F eine Zielfunktion optimiert. Die Zielfunktion besitzt die Form Σᵢ *ωᵢ* (*STᵢ* - *RTᵢ*)², wobei i=1,2,3 ein Index ist, der über die Zeitpunkte 22 Uhr, 6 Uhr und 14 Uhr reicht. *STᵢ* ist eine Solltemperatur für einen bestimmten Zeitpunkt. In der Nacht soll im Führungsraum 11 weniger stark geheizt werden, weshalb *ST*₂ (6 Uhr) = 18°C kleiner ist als *ST*₁ (22 Uhr) = 22°C und *ST*₃ (14 Uhr) = 22°C. *RT*ᵢ ist die berechnete Raumtemperatur zu einem der Zeitpunkte. *ωᵢ* ist ein zeitabhängiger, reeller Faktor, der für Zeitpunkte, die weiter in der Zukunft liegen, kleiner wird als für Zeitpunkte, die näher an der aktuellen Zeit liegen. Vorliegend ist *ω*₁ (22 Uhr )= 5/6, *ω*₂ (6 Uhr) = 4/6 und *ω*₃ = (14 Uhr) 3/6. Dadurch ist der Beitrag der Abweichung der Raumtemperatur von der Solltemperatur um 14 Uhr schwächer gewichtet als der um 6 Uhr oder 22 Uhr. Die Zielfunktion quantifiziert somit Abweichungen der Raumtemperatur von der Solltemperatur in dem Führungsraum, wobei unterschiedliche Zeitpunkte in einer Summe der Abweichungen unterschiedlich stark gewichtet werden.

Die Zielfunktion wird für jedes Paar von Eingangs- und Ausgangssequenzen berechnet, also für jedes der neun Werte-Paare 10 (*Sᵢ*, *Pⱼ*). Ein Gradientenabstiegsverfahren wird als Optimierungsalgorithmus verwendet, um Werte der Heizkurvenparameter zu ermitteln, für welche die Zielfunktion minimal ist. Für die neun Werte-Paare 10, die jeweils einem Punkt im Heizkurvenparameterraum entsprechen, ist je ein Wert der Zielfunktion bekannt. Diese Werte-Paare 10 dienen während der Optimierung als Stützstellen für eine Interpolation.

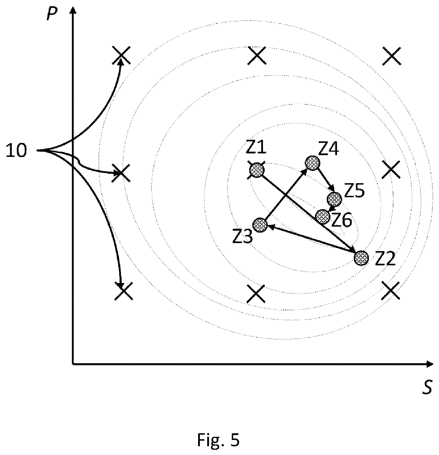

In Figur 5 ist der Heizkurvenparameterraum, der durch S und P aufgespannt wird, mit gepunkteten, äquidistanten Linien dargestellt. Weiter außen verlaufende Linien besitzen einen größeren Wert der Zielfunktion als weiter innen verlaufende Linien. Zunächst berechnet der Optimierungsalgorithmus Gradienten zwischen den Stützstellen 10. Ausgehend vom geringsten Wert der Zielfunktion einer Stützstelle Z1 berechnet der Algorithmus, anhand der Gradienten, an welchem Ort im Heizkurvenparameterraum als nächstes die Zielfunktion ermittelt werden soll. Nach dieser Vorgabe werden *S* und P variiert. Die so berechneten Werte S und P ergeben dabei einen Punkt im Heizkurvenparameterraum, für den die Zielfunktion nicht bekannt ist. Vorliegend wird mittels einer stückweisen polynomiellen Interpolation anhand der bekannten Werte der Zielfunktion an den Stützstellen ein Wert der Zielfunktion am Ort Z2 berechnet. Fortlaufend werden die Optimierungsschritte - Berechnen einer Vorgabe des Optimierungsalgorithmus und Variieren von *S* und P anhand der Vorgabe, sowie Berechnen der Zielfunktion am Ort der variierten Heizkurvenparameter mittels der stückweisen polynomiellen Interpolation - wiederholt, wobei Abbruchkriterien ausgewertet werden. Am Punkt Z6 angekommen, ist ein Abbruchkriterium erfüllt und die gefundene Lösung wird als optimale Lösung ausgewählt. *S* und P am Punkt Z6 sind die ermittelten optimierten Heizkurvenparameter.

Die so ermittelten optimierten Heizkurvenparameter werden von der Recheneinheit 3' in der Rechnerwolke 15 an die Recheneinheit 3 im Gebäude 4 übermittelt. Die Recheneinheit 3 stellt diese Heizkurvenparameter zur Verfügung, sodass sie an der Wärmepumpe eingestellt werden können.

### Bezugszeichenliste

- 1: Heizsystem
- 2: Temperatursensor
- 3, 3': Recheneinheit, weitere Recheneinheit
- 4: Gebäude
- 5, 5': Messwerte der Raumtemperatur, zukünftige Werte der Raumtemperatur
- 6, 6': Messwerte der Vorlauftemperatur, zukünftige Werte der Vorlauftemperatur
- 7, 7': Messwerte der Außentemperatur, zukünftige Werte der Außentemperatur
- 8: Eingangssequenz
- 9: Ausgangssequenz
- 10: Parametersätze
- 11: Führungsraum
- 12: Vorlauf
- 13: Fußbodenheizung
- 14: Heizquelle
- 15: Rechnerwolke

## Patentansprüche

1. Verfahren zur Ermittlung optimaler Heizkurvenparameter eines Heizsystems (1) für ein Gebäude (4), zumindest Steigung und/oder Parallelverschiebung einer Heizkurve des Heizsystems, mittels eines maschinellen Lernalgorithmus, umfassend die folgenden Verfahrensschritte:
A Messen zumindest einer Raumtemperatur zumindest eines Führungsraums (11) und einer Außentemperatur mittels Temperatursensoren (2), sowie Aufzeichnen der Messwerte mittels einer Recheneinheit (3);
B Auswählen von N Parametersätzen für die Heizkurvenparameter;
C Berechnen von zukünftigen Werten zumindest der Vorlauftemperatur bis zu einem Optimierungshorizont für jeden der N Parametersätze;
D Erstellen einer Eingangssequenz (8) für jeden der N Parametersätze, wobei jede Eingangssequenz (8) die aufgezeichneten Messwerte (5, 6, 7) aus Verfahrensschritt A und die berechneten Werte (6') aus Verfahrensschritt C umfasst, welche für den zugrundeliegenden Parametersatz berechnet wurden;
E Berechnen von Ausgangssequenzen (9) in Form von zukünftigen Werten der Raumtemperatur (5') ausgehend von den N Eingangssequenzen (8) mittels des maschinellen Lernalgorithmus;
F Erzeugen einer Zielfunktion auf Basis der Ausgangssequenzen (9) vom aktuellen Zeitpunkt bis zum Optimierungshorizont derart, dass die Zielfunktion von einer Abweichung der zukünftigen Werte der Raumtemperatur (5') von einer Solltemperatur abhängt;
G Optimieren der Zielfunktion zur Bestimmung optimaler Heizkurvenparameter.

2. Verfahren nach Anspruch 1,
**dadurch gekennzeichnet, dass** die Zielfunktion optimiert wird, indem die folgenden Optimierungsschritte ausgeführt werden, bis ein Abbruchkriterium erfüllt ist:
- Variieren der Heizkurvenparameter;
- Auswerten der Zielfunktion in Abhängigkeit der variierten Heizkurvenparameter mittels Interpolierens zwischen vormals berechneten Werten der Zielfunktion und/oder mittels Berechnung weiterer Werte der Raumtemperatur mit dem maschinellen Lernalgorithmus.

3. Verfahren nach einem der vorangegangenen Ansprüche,
**dadurch gekennzeichnet, dass** in Verfahrensschritt B eine Mehrzahl N an Parametersätzen ausgewählt wird und in Verfahrensschritt G das Optimieren der Zielfunktion nach Variieren der Heizkurvenparameter durch Interpolieren zwischen vormals berechnete Werten der Zielfunktion berechnet werden.

4. Verfahren nach Anspruch 1 oder 2,
**dadurch gekennzeichnet, dass** in Verfahrensschritt G zum Optimieren der Zielfunktion die folgenden Optimierungsschritte wiederholt werden, bis ein Abbruchkriterium erfüllt ist:
- Variieren der Heizkurvenparameter nach Vorgabe des Optimierungsalgorithmus;
- Berechnen weiterer zukünftiger Werte der Vorlauftemperatur (6) anhand der variierten Heizkurvenparameter und Bilden einer weiteren Eingangssequenz (8), wobei die Eingangssequenz (8) die weiteren berechneten Werte der Vorlauftemperatur umfasst;
- Auswerten der Zielfunktion, indem anhand der variierten Heizkurvenparameter weitere zukünftige Werte der Vorlauftemperatur (6') berechnet werden, mit diesen Werten eine weitere Eingangssequenz (8) erstellt wird und anhand der weiteren Eingangssequenz weitere Werte der Raumtemperatur mittels des maschinellen Lernalgorithmus berechnet werden.

5. Verfahren nach einem der vorangegangenen Ansprüche,
**dadurch gekennzeichnet, dass** die optimalen Heizkurvenparameter dem Heizsystem (1) zur Verfügung gestellt werden, vorzugsweise quasi-kontinuierlich, insbesondere in Echtzeit.

6. Verfahren nach einem der vorangegangenen Ansprüche,
**dadurch gekennzeichnet, dass** die Heizkurvenparameter während eines vorgebbaren Zeitraums optimiert werden oder während eines flexiblen Zeitraums, solange eine signifikante Verbesserung erkennbar ist, optimiert werden und in einem Verfahrensschritt H die für den gesamten betrachteten Zeitraum optimierten, bevorzugt durch gewichteten laufenden Mittelwert, konstanten Heizkurvenparameter dem Heizsystem zur Verfügung gestellt werden, insbesondere dass zumindest die Verfahrensschritte A bis H und/oder der maschinelle Lernprozess bis Ablauf einer vorgebbaren Dauer oder solange eine signifikante Verbesserung erkennbar ist wiederholt ausgeführt werden.

7. Verfahren nach einem der vorangegangenen Ansprüche,
**dadurch gekennzeichnet, dass** die Eingangssequenzen (8) Daten einer Wetterprognose, zumindest der Außentemperatur (7), umfassen.

8. Verfahren nach einem der vorangegangenen Ansprüche,
**dadurch gekennzeichnet, dass** in Verfahrensschritt D historische Werte zumindest der Vorlauftemperatur und der zugehörigen Raumtemperatur bereitgestellt werden, mit denen in Verfahrensschritt D die Eingangssequenzen (8) erstellt werden.

9. Verfahren nach einem der vorangegangenen Ansprüche,
**dadurch gekennzeichnet, dass** die N Testparametersätzen für die Heizkurvenparameter aus einem gegebenen Parameterraum bestimmt werden, indem gleichverteilt über den Parameterraum eine vorgebbare Anzahl Parametersätze verteilt werden.

10. Verfahren nach einem der vorangegangenen Ansprüche,
**dadurch gekennzeichnet, dass** die Zielfunktion von einer Approximation des elektrischen Energieverbrauchs des Heizsystems (1) abhängt, bevorzugt für zumindest einen zukünftigen Zeitpunkt.

11. Verfahren nach einem der vorangegangenen Ansprüche,
**dadurch gekennzeichnet, dass** die Zielfunktion mittels Interpolation, bevorzugt polynomielle oder stückweise polynomielle Interpolation, in Abhängigkeit der Heizkurvenparameter berechnet und mittels Optimierung, vorzugsweise ableitungsbasierte Optimierung, minimiert wird.

12. Verfahren nach zumindest einem der Ansprüche 5 oder 6,
**dadurch gekennzeichnet, dass** mittels der Recheneinheit (3) zumindest die Verfahrensschritte B bis H ausgeführt werden, und bevorzugt, dass die Recheneinheit (3) Teil des Heizsystems (1) ist.

13. Verfahren nach einem der vorangegangenen Ansprüche,
**dadurch gekennzeichnet, dass** der Optimierungshorizont einen Zeitschritt, bevorzugt mehr als einen Zeitschritt in der Zukunft liegt, höchstvorzugsweise, dass der Optimierungshorizont eine Stunde beträgt, bevorzugt länger als 12 Stunden, besonders bevorzugt zwischen 15 Minuten und 24 Stunden.

14. Verfahren nach einem der vorangegangenen Ansprüche,
**dadurch gekennzeichnet, dass** der maschinelle Lernalgorithmus als ein Transformer-Modell oder als ein Rekurrentes Neuronales Netzwerk, bevorzugt als ein Transformer-Modell mit einem Rekurrenten Neuronalen Netzwerk, ausgebildet ist und dass der Lernprozess für den maschinelle Lernalgorithmus zumindest eine der folgenden Methoden umfasst:
- Finetuning,
- Inkrementelles Lernen,
- Transfer Learning,
- Sequenzielle Anpassung,
- Hyperparameter-Tuning.

15. Verfahren nach Anspruch 14,
**dadurch gekennzeichnet, dass** der Lernprozess mittels der Methode des inkrementellen Lernens ausgebildet ist und zumindest die aufgezeichneten Messwerte aus Verfahrensschritt A und die berechneten Werte aus Verfahrensschritt C kontinuierlich für einen vorgebbaren Zeitraum gespeichert werden und Gewichte des maschinellen Lernalgorithmus bei wiederholter Durchführung des Verfahrens, insbesondere zu vorgebbaren Zeitpunkten angepasst werden.

16. Heizsystem (1) mit einem Vorlauf (12), einer Recheneinheit (3) und Temperatursensoren (2) zum Messen zumindest einer Raumtemperatur und einer Außentemperatur, wobei mittels der Temperatursensoren (2) gemessene Werte von der Recheneinheit (3) empfangen und aufgezeichnet werden, **dadurch gekennzeichnet, dass** die Recheneinheit (3) eingerichtet ist, das Verfahren nach zumindest einem der vorangegangenen Ansprüche auszuführen, oder dass die Recheneinheit (3) eine Schnittstelle aufweist, welche verbindbar mit einer externen Recheneinheit (3') ist, und die externe Recheneinheit (3') eingerichtet ist, das Verfahren nach zumindest einem der vorangegangenen Ansprüche auszuführen.

17. Computerprogramm, welches Anweisungen umfasst, durch deren Ausführung eine Recheneinheit (3) veranlasst wird, zumindest die Verfahrensschritte B bis G des Verfahrens nach einem der Ansprüche 1 bis 15 auszuführen.

18. Computerimplementiertes Verfahren zur Ermittlung optimaler Heizkurvenparameter eines Heizsystems (1), zumindest Steigung und Parallelverschiebung der Heizkurve des Heizsystems (1), für ein Gebäude (4) mittels eines maschinellen Lernalgorithmus, das Folgendes umfasst:
- Empfangen oder Auslesen von Messdaten, die zumindest eine mittels Temperatursensoren (2) gemessene Raumtemperatur (5) und eine mittels Temperatursensoren (2) gemessene Außentemperatur (7) umfassen;
- Ausführen von zumindest den Verfahrensschritten B bis G des Verfahrens nach einem der Ansprüche 1 bis 15;
- Bereitstellen von optimalen Heizkurvenparametern.
